(19) Europäisches Patentamt
European Patent Office
Office européen des brevets

(11) Veröffentlichungsnummer: **0 107 815**
**A1**

# (12) EUROPÄISCHE PATENTANMELDUNG

(21) Anmeldenummer: **83109932.0**

(22) Anmeldetag: **05.10.83**

(51) Int. Cl.³: **C 07 C 103/365**
C 07 C 103/56, C 07 C 103/76
C 08 F 226/02

(30) Priorität: **08.10.82 DE 3237309**

(43) Veröffentlichungstag der Anmeldung:
**09.05.84 Patentblatt 84/19**

(84) Benannte Vertragsstaaten:
**AT BE CH DE FR GB LI NL**

(71) Anmelder: **HOECHST AKTIENGESELLSCHAFT**
**Postfach 80 03 20**
**D-6230 Frankfurt am Main 80(DE)**

(72) Erfinder: **Bicker, Richard, Dr.**
**Brunnenstrasse 40**
**D-6237 Liederbach(DE)**

## (54) N-Vinylcarbonsäureamide.

(57) N-Vinylcarbonsäureamide der Formel

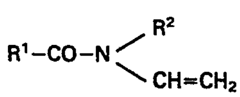

worin $R^1$ $C_8$-$C_{17}$-Alkyl, $C_8$-$C_{17}$-Alkenyl, Aryl oder Heteroaryl und $R_2$ $C_1$-$C_4$ Alkyl oder Aryl bedeutet sowie ein Verfahren zu deren Herstellung bei dem man aus einer Verbindung der Formel

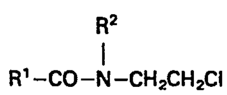

in einem aprotischen unpolaren organischen Lösungsmittel in Gegenwart einer Base und eines Phasentransferkatalysators Chlorwasserstoff abspaltet. Diese N-Vinylcarbonsäureamide eignen sich als Monomere bei der Herstellung von Copolymeren.

EP 0 107 815 A1

## N-Vinylcarbonsäureamide

N-Vinylcarbonsäureamide werden vielseitig verwendet als Monomere und Comonomere für Polymere mit interessanten technischen Eigenschaften (JACS 98, 5996), so z.B. N-Methyl-vinylacetamid als Schutzkolloid bei der Polymerisation von Styryl und als Monomer für Polymere, die als Borspülmittel bei der Erdölförderung eingesetzt werden.

Es wurden nun neue N-Vinylcarbonsäureamide entwickelt mit einem langkettigen Alkylrest. Polymere, die diese neuen N-Vinylamide als Comonomer enthalten, eignen sich besonders gut als sogenannte Paraffininhibitoren in Dieselkraftstoff und als Fließverbesserer (Flowimprover) bei Erdöl.

Gegenstand der Erfindung sind neue N-Vinylcarbonsäureamide der Formel

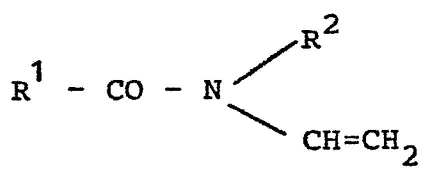

worin $R^1$ $C_6$-$C_{17}$-Alkyl, $C_6$-$C_{17}$-Alkenyl, Aryl, vorzugsweise Phenyl oder Heteroaryl, vorzugsweise Pyridyl und $R^2$ $C_1$-$C_4$-Alkyl oder Aryl, vorzugsweise Phenyl bedeutet.

Bevorzugt sind solche N-Vinylcarbonsäureamide der obigen Formel deren Gruppe $R^1$-CO sich ableitet von natürlich vorkommenden Fettsäuren und deren Gemischen wie etwa Stearinsäure, Palmitinsäure, Kokosfettsäuren und Talgfettsäuren. Neben den gesättigten Säuren kommen auch die ungesättigten Fettsäuren in Frage. Als Gruppe $R^2$ ist Methyl bevorzugt.

Die neuen Vinylcarbonsäureamide werden hergestellt gemäß dem in der DE-OS 30 30 544 beschriebenen Verfahren durch

eine Dehydrohalogenierung von N-(ß-Halogenethyl)-carbonsäureamiden unter dem Einfluß von Basen in einem aprotischen unpolaren organischen Lösungsmittel, und in Gegenwart eines Phasentransferkatalysators.

Die Darstellung der N-(ß-Halogenethyl)-carbonsäureamide erfolgt nach bekannten Methoden, z.B. nach dem in Zh. Obsh. Khim. 33, 391 (1963) beschriebenen Zweistufenverfahren, welches sich durch folgendes Formelschema wiedergeben läßt:

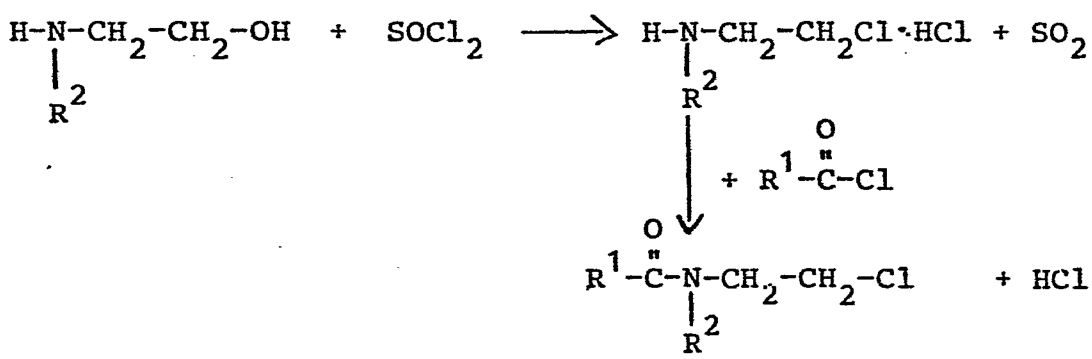

Unter den für das Verfahren zur Herstellung der N-Vinylcarbonsäureamide in Frage kommenden Basen werden sowohl praktisch alle Alkali- als auch Erdalkalihydroxide verstanden sowie die Alkoholate. Bevorzugt ist jedoch die Verwendung von NaOH und von KOH, insbesondere von KOH und K-tert.-Butylat.

Diese Hydroxide werden zweckmäßig in möglichst feinteiliger Form angewandt und zwar vorteilhaft in stöchiometrischer Menge.

Als aprotische unpolare organische Lösungsmittel kommen im Prinzip alle inerten organischen Lösungsmittel dieser Charakteristik in Frage; bevorzugt sind jedoch aliphatische und aromatische Kohlenwasserstoffe mit bis zu etwa 10 C-Atomen (Petroläther, Cyclohexan, Benzol, Toluol, Xylole etc.).

Als Phasentransferkatalysatoren können im Prinzip alle für derartige Zwecke geeigneten Verbindungen verwendet werden. Bevorzugt sind quartäre Ammonium- und Phosphoniumsalze (insbesondere die Halogenide), welche sowohl allein als auch in Mischung miteinander angewandt werden können sowie die Kronenäther.

In beispielhafter Weise werden folgende Verbindungen genannt:
Hexadecyltrimethylethylammoniumbromid,
Tricaprylmethylammoniumchlorid,
Tetrabutylammoniumbromid,
Ethyltrioctylphosphoniumbromid, 18-Krone-6 etc.

Die Menge des eingesetzten Phasentransferkatalysators beträgt zweckmäßig zwischen etwa 0,5 und 10 Mol.-%, vorzugsweise zwischen etwa 1 und 5 Mol-%, bezogen auf das Ausgangs-N-(ß-halogenethyl)-carbonsäureamid.

Die Reaktionstemperatur kann in relativ weiten Grenzen (im allgemeinen zwischen etwa 0 und 150°C) gewählt werden; bevorzugt sind Temperaturen zwischen etwa 10 und 100°C, insbesondere zwischen etwa 20 und 60°C. Mit ganz besonderem Vorteil wird das Verfahren bei Raumtemperatur durchgeführt. Die Reaktionszeit beträgt bis zum vollständigen Umsatz im allgemeinen zwischen etwa 1 und 5 Stunden.

Bei der Durchführung des Verfahrens wird die Ausgangsmischung aus dem entsprechenden N-(ß-halogenethyl)-carbonsäureamid, der Base, dem aprotischen unpolaren organischen Lösungsmittel und dem Phasentransferkatalysator im entsprechenden Mengenverhältnis zweckmäßig heftig gerührt. Das bei der Reaktion gebildete Wasser kann gegebenenfalls auf bekannte Weise mittels eines Wasserabscheiders ausgekreist werden. Die Aufarbeitung des Reaktionsansatzes erfolgt auf an sich bekannte Weise.

Die erfindungsgemäßen N-Vinylcarbonsäureamide eignen sich als Comonomere bei der Herstellung von Copolymeren mit Acrylsäureestern. Diese Copolymere zeigen verbesserte Eigenschaften als Fließverbesserer in Erdöl und als Paraffininhibitoren in Dieselkraftstoff.

Die Erfindung wird durch die folgenden Beispiele näher erläutert.

Darstellung der Ausgangsverbindungen (ß-Chlorverbindungen)

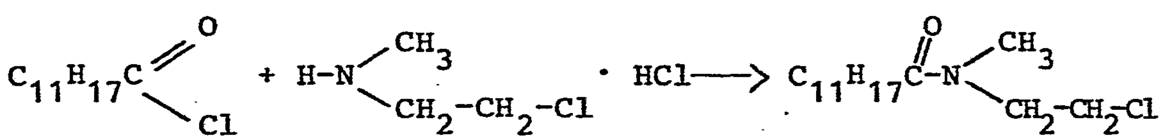

129.9 g 1.0 Mol des Hydrochlorids von N-Methyl-N-(ß-Chlorethyl)amin werden in 300 ml Toluol gegeben und bei 110°C 1 mol 218.77 g Laurylsäurechlorid zugetropft bis zur beendeten HCl-Entwicklung. Die Reaktionsmischung wird weitere 2h bei 120-130°C gerührt und noch solange Säurechlorid zugetropft, bis keine HCl-Entwicklung mehr stattfindet. Das Toluol wird scharf abgezogen am Rotationsverdampfer,der Rückstand enthält die rohe ß-Chlorverbindung (90-98 %ig), die zur HCl-Eliminierung direkt eingesetzt werden kann.

Durch Säulenchromatographie kann die ß-Chlorverbindung noch weiter gereinigt werden.

In analoger Weise werden die N-Methyl-N(ß-Chlorethyl) carbonsäureamide folgender Carbonsäure hergestellt: Benzoesäure, Hexansäure, Octansäure, Palmitinsäure, Stearinsäure.

Außerdem wurden auch noch folgende Säurechloride natürlicher Fettsäuren und deren Gemische eingesetzt, im folgenden mit Chloröl bezeichnet:

Chloröl L - Laurinsäurechlorid ( 98 %)
Chloröl K - aus einer Mischung von Palmitinfettsäure
Chloröl TE- aus pflanzlichen Mischölfettsäuren, vorwiegend Ölsäure
Chloröl TR- aus Mischölfettsäuren pflanzl. Ursprungs
Chloröl TSP - Mischung aus TE und TR.

Beispiel 1

1,54 g = 0,0043 Mol N-Methyl-ß-chlorethylstearinsäureamid in 20 ml Petroläther 60/90 wurden mit 0,5 g Kalium-tert.-Butylat und 20 mg 18-Krone-6 versetzt und 4 Stunden bei Raumtemperatur gerührt. Man erhielt N-Methyl-N-vinylstearinsäureamid.

Beispiel 2:

2.18 g = 0,008 mol N-Methyl-N-ß-chlorethyllaurinsäureamid in 30 ml Petroläther 60/90 wurden mit 0.5 g Tetrabutylammoniumbromid, 0.68 g KOH-Pulver und 10 mg Hydrochinon versetzt und 2 h bei Rückflußtemperatur gerührt. Nach gaschromatographischer Untersuchung liegen neben 69.6 % N-Methyl-N-vinyl-laurinsäureamid noch 9.3 % Ausgangsverbindung vor.

Beispiel 3:

187 g = 0.97 mol N-Methyl-N-ß-chlorethylhexansäureamid in 2 l Petroläther 60/90 wurden mit 120 g Kalium-t-butylat = 1.06 mol versetzt und nach Zusatz von 0.5 g 18-Krone-6 und 1 g Hydrochinon 3 h bei Raumtemperatur gerührt. Man versetzte mit ca. 100 g Kieselgur und

filterte über eine Drucknutsche. Nach Abziehen des Petroläthers an Rotationsverdampfer erhielt man in 79 %iger Ausbeute das N-Methyl-N-vinylhexansäureamid.

Beispiel 4:

276.7 g Chloröl K = 0.96 mol bezogen auf das mittlere Molgen in 2 l Petroläther 60/90 wurden mit 120 g KOH versetzt und nach Zusatz von 0.5 g 18-Krone-6 und 1 g Hydrochinon 3 h bei Raumtemperatur gerührt. Die Aufarbeitung erfolgte wie in Beispiel 3 beschrieben, die Ausbeute an N-Methyl-N-vinylfettsäureamid beträgt ca. 60 %.

Patentansprüche:

1. N-Vinylcarbonsäureamide der Formel

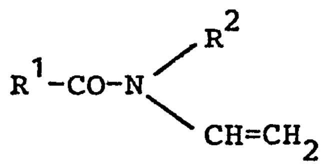

worin $R^1$ $C_6$-$C_{17}$-Alkyl, $C_6$-$C_{17}$-Alkenyl, Aryl oder Heteroaryl bedeutet.

2. Verfahren zur Herstellung der N-Vinylcarbonsäureamide nach Anspruch 1, dadurch gekennzeichnet, daß man aus einer Verbindung der Formel

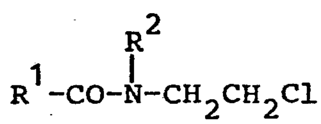

in einem aprotischen unpolaren organischen Lösungsmittel in Gegenwart einer Base und eines Phasentransferkatalysators Chlorwasserstoff abspaltet.

3. Verwendung der N-Vinylcarbonsäureamide nach Anspruch 1 als Monomere bei der Herstellung von Copolymeren.

Patentansprüche für Österreich:

1. Verfahren zur Herstellung von N-Vinylcarbonsäureamiden der Formel

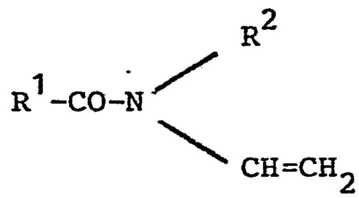

worin $R^1$ $C_6$-$C_{17}$-Alkyl, $C_6$-$C_{17}$-Alkenyl, Aryl oder Heteroaryl bedeutet, dadurch gekennzeichnet, daß man aus einer Verbindung der Formel

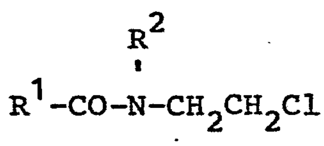

in einem aprotischen unpolaren organischen Lösungsmittel in Gegenwart einer Base und eines Phasentransferkatalysators Chlorwasserstoff abspaltet.

2. Verwendung der N-Vinylcarbonsäureamide, hergestellt nach Anspruch 1 als Monomere bei der Herstellung von Copolymeren.

0107815

Europäisches Patentamt

# EUROPÄISCHER RECHERCHENBERICHT

Nummer der Anmeldung

EP 83 10 9932

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-2 717 886 (R.R. MORNER u.a.)<br>* Ansprüche * | 1,3 | C 07 C 103/365<br>C 07 C 103/56<br>C 07 C 103/76<br>C 08 F 226/02 |
| X | GB-A-1 046 091 (HOECHST)<br>* Ansprüche; Beispiel 6 * | 1,3 | |
| Y | US-A-3 919 225 (R.J. ARNOLD u.a.)<br>* Spalten 1-2 * | 1,3 | |
| Y | CHEMICAL ABSTRACTS, Band 97, Nr. 10, 6. September 1982, Seite 114, Nr. 74341m, und Formula Index, Seite 1664, Spalte 3, Columbus, Ohio, US<br>& JP - A - 82 25 398 (ASAHI CHEMICAL INDUSTRY CO., LTD.) 10.02.1982 | 1,3 | RECHERCHIERTE SACHGEBIETE (Int. Cl. ³) |
| D,Y | DE-A-3 030 544 (HOECHST)<br>* Ansprüche * | 1-3 | C 07 C 103/00<br>C 08 F 226/00 |

Der vorliegende Recherchenbericht wurde für alle Patentansprüche erstellt.

| Recherchenort | Abschlußdatum der Recherche | Prüfer |
|---|---|---|
| DEN HAAG | 16-01-1984 | MOREAU J.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82